# FASCICULE DE BREVET EUROPEEN

(11) **EP 3 448 824 B1**
(45) Date de publication et mention de la délivrance du brevet: **27.10.2021**
(21) Numéro de dépôt: 17725306.9
(22) Date de dépôt: 24.04.2017
(51) Int. Cl.: C03C 27/06, B32B 17/10, B60Q 1/02, B60K 35/00, B60Q 1/26

(54) **VITRAGE FEUILLETÉ COMPRENANT UN JEU DE DIODES**
VERBUNDGLAS MIT EINEM SATZ VON DIODEN
LAMINATED GLASS COMPRISING A SET OF DIODES

(30) Priorité: 27.04.2016 FR 1653743
(43) Date de publication de la demande: 06.03.2019
(73) Titulaire: SAINT-GOBAIN GLASS FRANCE, 92400 Courbevoie (FR)
(72) Inventeur: FREBOURG, Philippe, 60300 Senlis (FR)
(74) Mandataire: Saint-Gobain Recherche
(86) Numéro de dépôt international: PCT/FR2017/050969
(87) Numéro de publication internationale: WO 2017/187075

(56) Documents cités:
- WO-A1-2004/009349
- DE-A1-102007 012 571

## Description

La présente invention se rapporte au domaine des vitrages bombés et feuilletés pour application automobile ou autre, dans lesquels on veut intégrer des composants dans la feuille d'adhésif intercalaire (tel que polyvinylbutyral - PVB-), elle-même prise en sandwich entre deux feuilles de verre.

A l'heure actuelle, les verriers éprouvent une grande difficulté à intégrer des composants ayant une épaisseur et une surface significatives, soit typiquement une épaisseur supérieure à 0.2 mm et des dimensions latérales supérieures à 5 mm.

En effet, un tel composant placé directement entre les feuilles de verre va créer un volume supplémentaire. Par ailleurs, il est connu que dans le procédé d'assemblage et d'autoclavage, le PVB a du mal à fluer sur des distances supérieures à quelques millimètres. Aussi, le volume supplémentaire apporté par le composant se traduira par une surépaisseur locale du vitrage et entrainera une déformation des verres intérieur et extérieur qui composent le produit. En conséquence, différents phénomènes indésirables peuvent survenir :
- la casse de l'un des deux verres, par une déformation trop importante de ces derniers, induisant des contraintes locales d'extension trop importantes ;
- du bullage autour du composant introduit dans le vitrage, provenant d'une faible pression locale dans le PVB ; cette faible pression est due à la déformation du vitrage par le volume du composant et par un comblement partiel du volume libre autour de ce dernier, à cause d'un fluage imparfait du PVB lors des opérations d'assemblage et d'autoclavage ; ce manque de matériau PVB ou cette faible pression partielle dans le matériau favorise la formation de bulles par dégazage des petites molécules présentes dans le PVB ;
- une qualité optique en transmission très affectée ; en effet, lorsque le PVB est parvenu à fluer suffisamment (ou bien, de manière équivalente, si le volume du composant est suffisamment faible), on évite alors les phénomènes de casse et de bullage ; par contre, la surépaisseur locale au niveau du composant perdure, ce qui déforme localement les faces extérieure et intérieure du vitrage ; il se forme donc un dioptre optique qui induit une importante distorsion optique très gênante pour les occupants du véhicule ;
- enfin, la surépaisseur locale peut aussi se traduire par une qualité optique en réflexion amoindrie du vitrage ; ce critère dépendant de la position de la déformation sur le vitrage ainsi que de la position de l'observateur est peut-être plus ou moins aisé à identifier.

Les exemples de composants susceptibles d'être introduits dans un vitrage feuilleté automobile sont nombreux. Nous en avons choisi deux à titre d'illustration :
Le premier consiste en un jeu de trois diodes (telles que rouge, orange, bleue) qui sont insérées sous la sérigraphie en bande basse du vitrage. La fonctionnalité que l'on a imaginée pour ces diodes est de s'allumer en fonction de diverses conditions de roulement. La sérigraphie présente trois épargnes aménagées sous forme de disque afin de bien laisser passer la lumière émise par les diodes. Les diodes et leur électronique de régulation sont portées par un circuit imprimé flexible (en anglais : Flexible Printed Circuit - FPC -) mince. Le tout est relié à une nappe de câbles munie d'un connecteur à son extrémité. L'ensemble FPC et nappe de câbles est caché de la vue du conducteur par une couche d'émail déposée en face 4 du vitrage (par convention de manière bien connue, la face 4 est celle d'un pare-brise, par exemple, qui est en contact avec l'habitacle d'un véhicule de transport, la face 1 étant la face en contact avec l'atmosphère extérieure, les faces 2 et 3 étant les faces de verre intérieures du feuilleté numérotées dans l'ordre). L'ensemble diodes, FPC et nappe de câbles est caché de la vue d'un observateur extérieur par une couche d'émail déposée en face 2 du vitrage.

Le second composant, qui n'est pas dans le cadre de l'invention, est un câble relativement épais et blindé qui permet de connecter une caméra, située à l'intérieur de l'habitacle derrière le rétroviseur, à son calculateur situé en un autre endroit de l'habitacle du véhicule. Afin d'être plus discret, le câble chemine à l'intérieur du produit feuilleté et passe par un trou percé dans le verre intérieur du vitrage. Le câble est muni d'un connecteur afin de faciliter sa connexion lors de l'assemblage du véhicule. Comme dans le cas de diodes, le câble est caché des occupants du véhicule par un dépôt d'émail en face 4 et de la vue d'un observateur extérieur par un dépôt d'émail en face 2. Ce type de produit s'inspire des documents WO2014057224 (A1) et US2015283797 (A1).

Il est d'usage de fabriquer des composants les plus minces possible afin de limiter l'effet de prise de volume local de l'ensemble PVB + composant. C'est ainsi que selon le document US2015283797 (A1) qui décrit un produit ayant un conducteur noyé dans le PVB, on mentionne que respectivement, 1) les conducteurs se présentent sous forme d'un ruban contenant plusieurs conducteurs, 2) que ce ruban a une épaisseur comprise entre 0.05 mm et 1 mm, et 3) que préférentiellement ce conducteur a une épaisseur comprise entre 0.08 mm et 0.5 mm.

L'usage veut que l'on n'assemble pas de composants ayant une épaisseur supérieure à environ 0.2 mm.

Lorsque les composants sont plus épais, une technique connue est d'effectuer plusieurs découpes avec des feuilles de PVB de différentes épaisseurs afin d'avoir un ensemble PVB + composant d'épaisseur relativement constante sur toute la surface du vitrage.

Une difficulté tient à ce que le raboutage des différents morceaux de feuilles de PVB doit être précis et sans interstice car alors de petites bulles peuvent apparaitre (par manque local de matière) en sortie autoclave.

Deux autres difficultés tiennent à ce qu'un tel assemblage met en œuvre essentiellement deux feuilles de PVB : 1) le coût est plus élevé, et 2) par le doublement des interfaces, la probabilité d'avoir un défaut d'aspect par emprisonnement d'une poussière ou d'une fibre est doublée, ce qui est un problème important pour des produits de haute valeur ajoutée.

Comme nous l'avons vu ci-dessus, c'est la faible capacité du PVB à fluer sur de grandes distances qui est responsable de la plupart des conséquences néfastes de l'introduction d'un composant épais dans l'épaisseur du vitrage feuilleté.

D'autres intercalaires sont parfois utilisés comme le copolymère d'éthylène et d'acrylate de vinyle (EVA) ou le polyuréthane (PU) qui ont de meilleures propriétés de fluage mais qui ont l'inconvénient de mal résister aux normes automobiles ou bien d'être onéreux.

Comme indiqué précédemment, les principaux inconvénients du feuilletage de composants dans un vitrage feuilleté sont :
1) la casse de l'un des deux verres, par une déformation trop importante de ces derniers ;
2) du bullage autour du composant introduit dans le vitrage, provenant d'une faible pression locale dans le PVB suite au faible fluage du matériau polymère lors des étapes d'assemblage et d'autoclave ;
3) une qualité optique en transmission très affectée autour du composant due à la déformation des deux verres au voisinage du composant ;
4) une qualité optique en réflexion dégradée du vitrage au voisinage du composant ;

En conséquence et afin d'obtenir des produits viables, il est d'usage de se limiter à des composant de faible épaisseur, comme par exemple le cas de la nappe de câbles du brevet US2015283797 (A1).

Enfin le procédé d'assemblage de composants un peu épais doit se faire en découpant et en assemblant des feuilles d'épaisseurs différentes afin d'essayer de retrouver une épaisseur du système 'intercalaire PVB + composant' relativement constante. Ces découpes et empilages sont difficiles à maitriser et conviennent mal à des produits industriels. Les défauts qualités sont nombreux.

Le document WO 2004/009349 A1 décrit un procédé d'assemblage d'un vitrage feuilleté comprenant un composant « surmoulé », mais pas une mesure technique pour maintenir en position relative les constituants du vitrage feuilleté pendant son assemblage. Le document DE10200701257 A1 divulgue un sujet similaire.

Pour mettre en œuvrel'invention, au contraire, un procédé d'assemblage d'un vitrage feuilleté comprend un composant surmoulé, caractérisé en ce qu'il comprend les opérations qui consistent à :
- préparer une feuille d'adhésif intercalaire principale par prédécoupe d'une fenêtre destinée à recevoir le composant surmoulé ;
- présenter une première feuille de verre propre ;
- mettre en place la feuille d'adhésif préalablement découpée sur la première feuille de verre et centrer la feuille d'adhésif par rapport à celle-ci ;
- mettre en place le composant surmoulé à l'intérieur de la fenêtre découpée dans la feuille d'adhésif, ou inversement mettre en place le composant surmoulé d'abord, puis la feuille d'adhésif préalablement découpée sur la première feuille de verre ;
- souder ponctuellement le composant surmoulé et la feuille d'adhésif prédécoupée sur la première feuille de verre au voisinage de la fenêtre afin que les parois latérales a) de la fenêtre découpée dans la feuille d'adhésif et b) du composant surmoulé restent jointives c'est-à-dire bien au contact l'une de l'autre ;
- mettre en place une seconde feuille de verre propre au-dessus de l'ensemble de la première feuille de verre, de la feuille d'adhésif et du composant surmoulé, ces deux derniers étant solidarisés par des points de soudure sur la première feuille de verre ;
- éventuellement souder ponctuellement l'ensemble ainsi obtenu afin que ses différents éléments restent bien solidaires les uns des autres lors de la suite du procédé ;
- supprimer l'adhésif excédentaire autour du vitrage par détourage au couteau par exemple, sauf si cette opération a été effectuée pendant la prédécoupe d'une fenêtre dans la feuille d'adhésif ; et
- assembler le vitrage feuilleté par la mise en œuvrede températures et pressions appropriées de manière habituelle.

Le terme « surmoulé » signifie ici « enrobé », « encapsulé » ou « noyé », sans présumer de la technique employée pour la préparation du composant surmoulé. Différentes techniques seront évoquées ci-dessous.

Selon des caractéristiques préférées de ce procédé :
- le vitrage est bombé, et la première feuille de verre est une feuille intérieure et présentée avec sa surface convexe dirigée vers le haut; la seconde feuille de verre étant une feuille extérieure ;
- le vitrage est bombé, et la première feuille de verre est une feuille extérieure et présentée avec sa surface concave dirigée vers le haut; la seconde feuille de verre étant une feuille intérieure ;
- le composant surmoulé est fabriqué par pressage du composant entre deux feuilles d'adhésif intercalaire dans un moule équipé de moyens de chauffage ;
- le composant surmoulé est fabriqué par extrusion d'une première feuille d'adhésif intercalaire, pose du composant sur celle-ci et extrusion d'une seconde feuille d'adhésif intercalaire sur le composant ;
- le composant surmoulé est fabriqué par injection d'adhésif intercalaire autour du composant ; chacune des trois techniques de pressage, extrusion et injection peut être employée seule ou en toute combinaison avec l'une ou les deux autres techniques ;
- la feuille d'adhésif intercalaire principale et le surmoulage du composant surmoulé comprennent un intercalaire de feuilletage acoustique ; celui-ci comporte une couche de cœur plus molle à teneur augmentée en plastifiants, ou tout au moins une alternance de couches relativement molles et relativement dures, et qui procurent la propriété d'isoler du bruit ;
- tout ou partie de la surface de la feuille d'adhésif intercalaire principale et du surmoulage du composant surmoulé, est coloré.

L'invention a pour objet un vitrage feuilleté comprenant un jeu de diodes et son électronique de régulation, qui sont portés par un circuit imprimé flexible (en anglais : Flexible Printed Circuit - FPC -) mince et reliés à une nappe de câbles munie d'un connecteur à son extrémité ; caractérisé en ce qu'il comporte deux feuilles de verre, en ce que l'ensemble du circuit imprimé flexible et de la nappe de câbles est caché du côté intérieur du vitrage par une couche d'émail déposée en face 4 du vitrage et présentant des épargnes en face de chaque diode pour laisser passer la lumière émise par celle-ci, et en ce que l'ensemble des diodes, du circuit imprimé flexible et de la nappe de câbles est caché du côté extérieur du vitrage par une couche d'émail déposée en face 2 du vitrage.

L'invention a d'autre part pour objet l'application d'un vitrage feuilleté décrit ci-dessus, comme vitrage pour un véhicule de transport terrestre, aquatique ou aérien, pour le bâtiment, le mobilier urbain, ou l'aménagement intérieur, et en particulier comme pare-brise, vitrage latéral, custode ou lunette arrière de véhicule automobile.

L'invention sera mieux comprise à la lumière de la description qui suit des dessins annexés dans lesquels :
- les Figures 1a et 1b ci-dessous sont des vues schématiques de face d'un pare-brise de véhicule automobile équipé des deux composants décrits ci-dessus ;
- les Figures 2 et 3 sont des vues schématiques en coupe et en détail du vitrage feuilleté dans sa partie où chacun des deux composants est inséré ; la représentation de la Figure 3 est exclue de l'invention ;
- la Figure 4 illustre schématiquement une section de la Figure 3 selon le plan A-A ;
- la Figure 5 illustre schématiquement le procédé de l'état de la technique pour insérer un composant d'épaisseur supérieure à 0,2 mm, dans un vitrage feuilleté ;
- les Figures 6a, 6b et 6c, respectivement 7a et 7b représentent schématiquement deux composants surmoulés, un câble qui relie une caméra, respectivement un composant à diodes électroluminescentes (en anglais Light Emitting Diodes -LEDs -) ; la représentation des Figures 6a, 6b et 6c est exclue de l'invention ;
- les Figures 8a-i illustrent les différentes étapes du procédé de l'invention ;
- les Figures 9a et 9b illustrent une technique de préparation d'un composant surmoulé par pressage dans un moule, selon une section A-A et en vue de dessus.

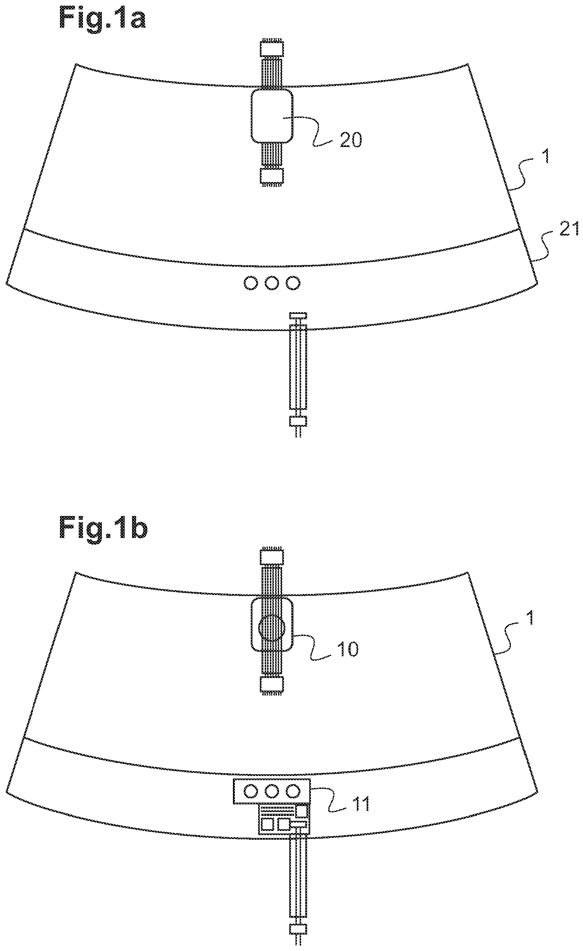

En référence aux Figures 1a et 1b, des composants surmoulés 10, respectivement 11 sont représentés en position haute, respectivement basse, sur un pare-brise 1 de véhicule automobile.

La Figure 1.a représente le produit tel qu'il apparaitrait au conducteur du véhicule. Les parties sérigraphiées 20, 21 en face 4 du pare-brise cachent une partie des composants surmoulés 10 et 11 de la vue d'un occupant du véhicule automobile, mais en laissent visibles les parties utiles vues de l'habitacle du véhicule. Ces parties sérigraphiées sont artificiellement représentées transparentes sur la figure 1.b afin que l'on puisse voir les composants surmoulés 10 et 11 qui sont introduits entre les feuilles de verre.

Le composant surmoulé 10 est une nappe de câbles qui permet de relier une caméra située à l'intérieur du véhicule à son calculateur qui est situé ailleurs dans l'habitacle du véhicule. Il est en position centrale haute sur le pare-brise et muni d'un connecteur à chacune de ses deux extrémités.

Le composant surmoulé 11 est un jeu de trois diodes en bande basse du pare-brise, qui peut être utilisé pour signaler des conditions de conduite particulières. Les diodes et leur électronique de régulation sont portées par un circuit imprimé flexible (en anglais : Flexible Printed Circuit - FPC -) mince. Le tout est relié à une nappe de câbles munie d'un connecteur à son extrémité.

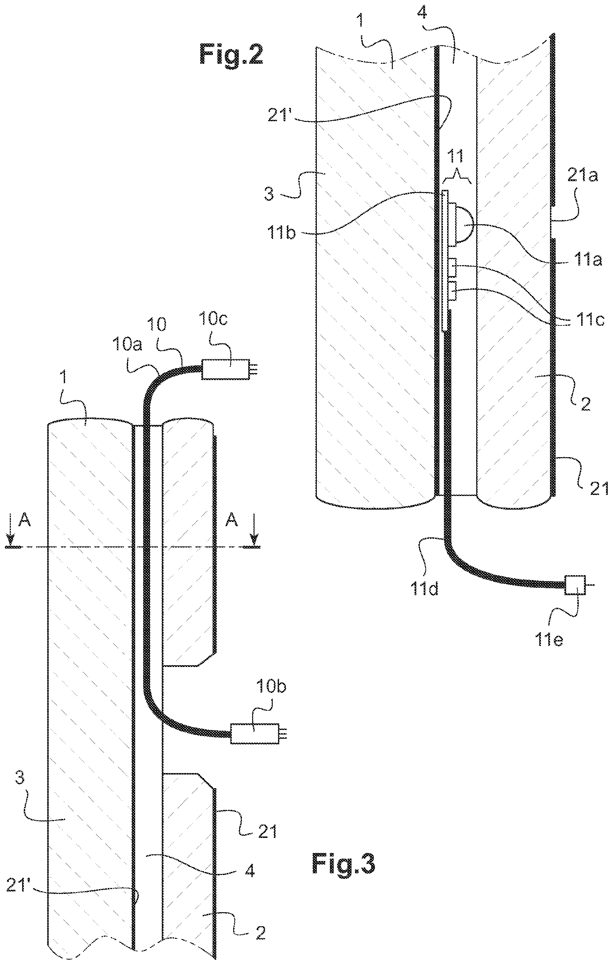

Les figures 2 et 3 illustrent plus en détail les différents composants et la façon dont ils sont insérés dans le PVB.

La Figure 2 est une représentation schématique partielle en coupe d'un pare-brise 1 comprenant un composant 11 à diode électroluminescente (en anglais Light Emitting Diode - LED -) disposé en bande basse du vitrage. Le pare-brise 1 est constitué d'une feuille de verre intérieure 2 et d'une feuille de verre extérieure 3 reliées par une feuille d'adhésif intercalaire 4 (polyvinylbutyral - PVB -). On distingue 1) la LED 11 a qui fait face à une épargne 21a dans la sérigraphie 21 en face 4 du pare-brise, 2) le FPC 11b avec des composants électroniques 11c dessus et 3) le câble d'alimentation et de contrôle 11d qui sort du vitrage 1 et qui est muni d'un connecteur 11e. Ce câble 11d peut rentrer à l'intérieur de l'habitacle afin d'être connecté au réseau électrique du véhicule. Le pare-brise 1 comporte par ailleurs une sérigraphie 21' en face 2, dont la fonction est notamment de cacher le cordon de colle du pare-brise à la baie de carrosserie, vu de l'extérieur du véhicule.

La Figure 3 est une représentation schématique partielle en coupe d'un pare-brise 1 comprenant un câble blindé 10 venant connecter une caméra derrière le rétroviseur. On distingue le câble 10a lui-même, le connecteur inférieur 10b permettant de connecter la caméra à l'intérieur du véhicule, et le connecteur supérieur 10c permettant de connecter le contrôleur de la caméra. Le câble 10a peut rentrer à l'intérieur de l'habitacle afin d'être connecté au réseau électrique du véhicule. Les autres constituants du pare-brise 1 sont ceux déjà décrits en relation avec la Figure 2.

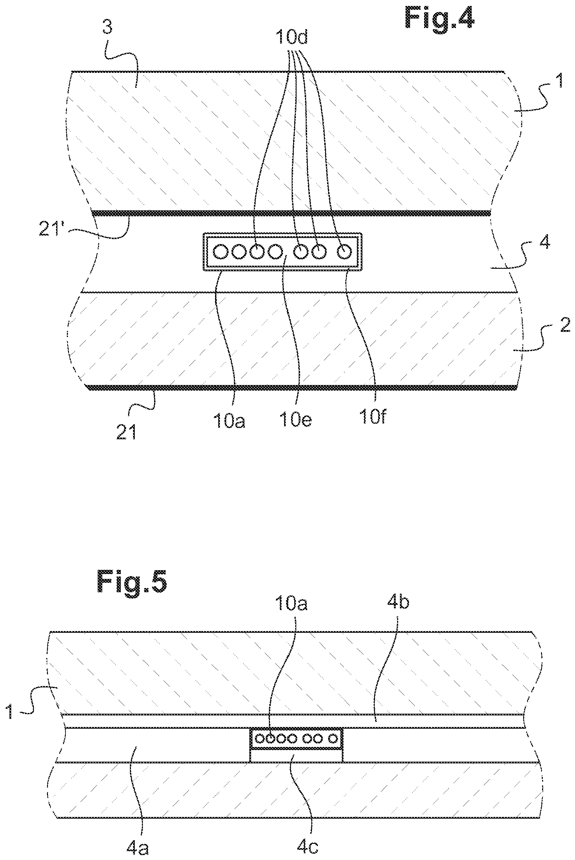

La Figure 4 est une section de la Figure 3 selon le plan A-A. Différents types de conducteurs 10d constituent la nappe de câbles 10a reliant la caméra. Leur fonction ne sera pas détaillée ici. Le matériau 10e est un isolant, le matériau 10f est un blindage.

La Figure 5 reprend la Figure 4 pour illustrer un procédé de l'état de la technique pour insérer la nappe de câbles 10a dans un vitrage feuilleté 1. L'ensemble des numéros de référence de la Figure 4 n'est pas repris dans la mesure où il ne sert pas à la compréhension du procédé.

Une nappe de câbles 10a épaisse de 0.4 mm est insérée dans le pare-brise feuilleté 1 L'assemblage est effectué grâce à deux feuilles de PVB 4a, respectivement 4b, d'épaisseurs 0.76, respectivement 0.38 mm qui enserrent la nappe de câbles 10a elle-même prise en sandwich entre deux feuilles 4c et 4b de 0.38 mm de PVB.

Ainsi, en tout point du produit, l'épaisseur apparente du composé PVB 4+ nappe de câbles 10a a une épaisseur d'environ 1.1 mm, ce qui va résoudre la plupart des problèmes classiques mentionnés ci-dessus.

Ensuite, lors de l'autoclave, le PVB sera amené à relativement haute température (supérieure à 100°C), ce qui va le ramollir et lui permettra de fluer. Un phénomène remarquable se produit alors, les interfaces entre les découpes des différents morceaux de PVB vont disparaitre, le PVB va en quelque sorte se cicatriser pour ne former en fin d'autoclave qu'un film homogène et continu de 1.1 mm d'épaisseur.

Une fois l'autoclavage terminé, le produit est parfaitement transparent, seule une légère distorsion optique en transmission peut apparaitre au voisinage du câble.

D'autres problèmes évoqués précédemment et liés à la multiplicité d'interfaces PVB/PVB, par exemple le risque d'avoir un défaut d'aspect par emprisonnement d'une poussière ou autre, sont déplorés.

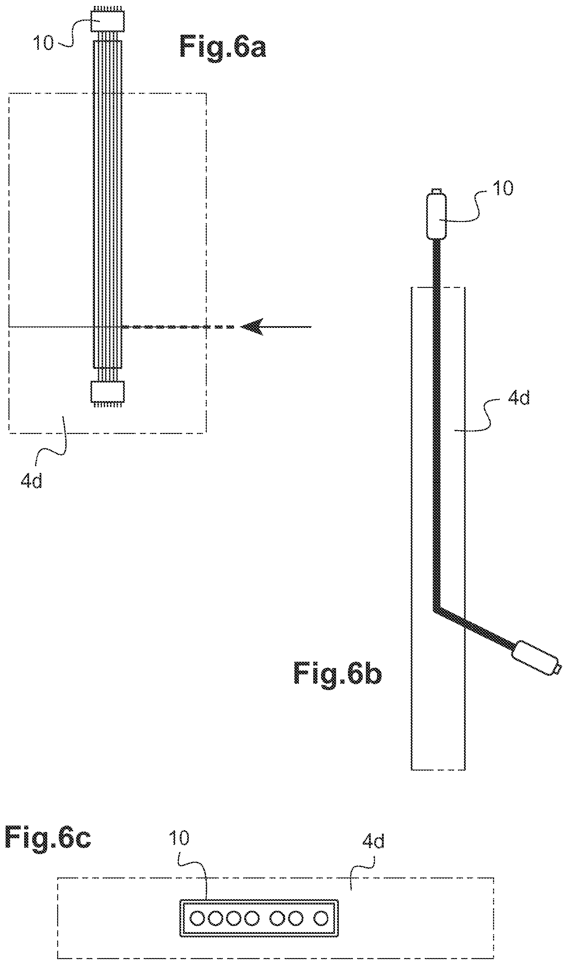

Les Figures 6a, 6b et 6c, respectivement 7a et 7b représentent schématiquement deux composants surmoulés, un câble qui relie une caméra, respectivement un composant à diodes électroluminescentes (en anglais Light Emitting Diodes -LEDs -).

En référence à ces figures, les composants sont surmoulés dans une feuille de PVB.de dimensions latérales limitées et de géométrie simple, typiquement rectangulaire. L'épaisseur du composant surmoulé est égale à l'épaisseur de la feuille de PVB du produit verrier, le plus souvent 0.76 mm.

Sur la Figure 6a, le composant surmoulé 10 pour application « connexion de caméra » est vu de face. Le composant 10 est un câble relativement épais, d'épaisseur typiquement supérieure à 0.1 mm et muni d'un connecteur à chacune de ses extrémités comme il a été détaillé précédemment. On voit au mieux sur la Figure 6b (vue en coupe) que le câble rentre dans la feuille de PVB 4d par la tranche de cette dernière, l'autre extrémité sort par la surface de la feuille de PVB 4d, afin de traverser le vitrage par le perçage qui est effectué dans le verre intérieur (non représenté ici), comme décrit en relation avec la Figure 3. La flèche sur la Figure 6a indique l'endroit où le composant sort de la feuille de PVB 4d.

La Figure 6c représente une section du composant surmoulé 10 réalisée dans la partie où le câble est noyé dans la feuille de PVB 4d.

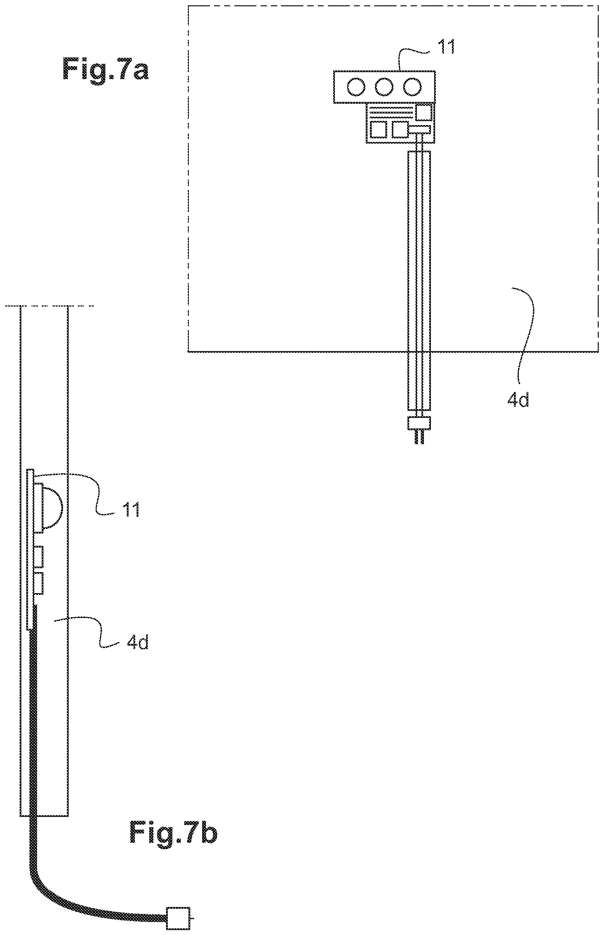

Sur la Figure 7a, le composant surmoulé 11 pour application LEDs est vu de face. Le composant 11 est composé d'un FPC avec des composants électroniques, des LEDs fixées à sa surface et d'un câble muni d'un connecteur, comme explicité plus en détails en relation avec la Figue 2. L'ensemble est surmoulé dans une feuille de PVB 4d d'épaisseur constante, en général de 0.76 mm. Le câble sort de la feuille de PVB 4d par la tranche de cette dernière et se prolonge à l'extérieur, comme vu au mieux sur la Figure 7b, qui est vue en coupe. L'extrémité du câble est munie d'un connecteur afin de pouvoir être reliée au faisceau électrique du véhicule.

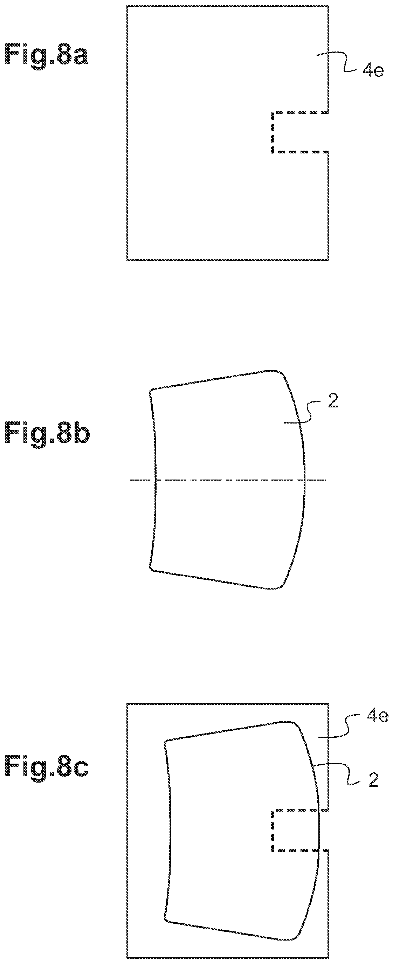

Le procédé d'assemblage d'un composant surmoulé dans un vitrage feuilleté selon l'invention est maintenant plus spécifiquement décrit en relation avec les Figures 8a-i.

La Figure 8a représente la préparation hors ligne de la feuille de PVB principale 4e par prédécoupe d'une fenêtre destinée à recevoir le composant surmoulé. On met en œuvre un système de découpe automatique lui-même composé d'une table, d'une lame supportée dans un outil orientable qui est lui-même solidaire d'un système de déplacement horizontal (en X-Y) du type chariot monté sur un pont et permettant de découper localement une feuille de PVB. En combinant les différents mouvements, il est possible de faire suivre à la lame des trajectoires de découpe quelconques.

La Figure 8b représente la présentation du verre intérieur 2 propre et surface convexe dirigée vers le haut. Alternativement, le verre extérieur propre et surface concave dirigée vers le haut, pourrait être présenté.

La Figure 8c représente la mise en place de la feuille de PVB 4e préalablement découpée (étape 1) sur la feuille de verre intérieur 2 et centrage de la feuille de PVB 4e par rapport au verre intérieur 2.

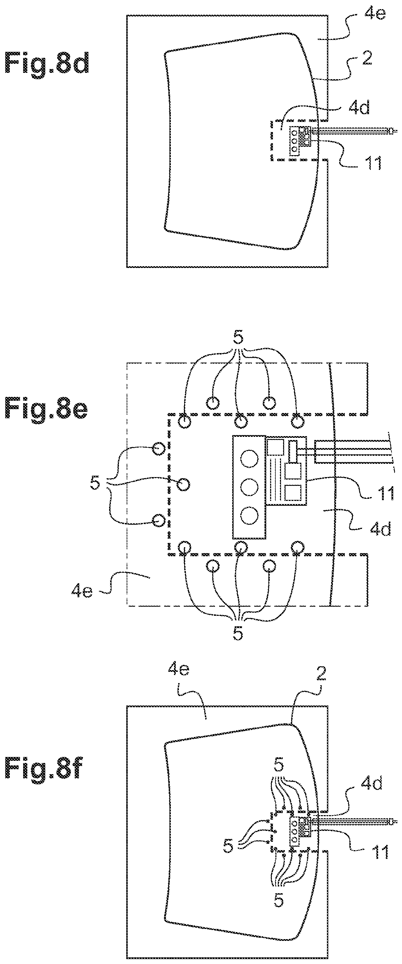

La Figure 8d représente la mise en place du composant surmoulé 11, 4d à l'intérieur de la fenêtre découpée dans la feuille de PVB 4e lors de l'étape 1.

La Figure 8e représente les soudures ponctuelles 5 du composant surmoulé 11, 4d et de la feuille de PVB 4e prédécoupée sur le verre intérieur 2 au voisinage de la fenêtre afin que les parois latérales a) de la fenêtre découpée dans la feuille de PVB 4e et b) du composant surmoulé 11, 4d restent jointives c'est-à-dire bien au contact l'une de l'autre. La Figure 8f est une vue globale de la Figure 8e.

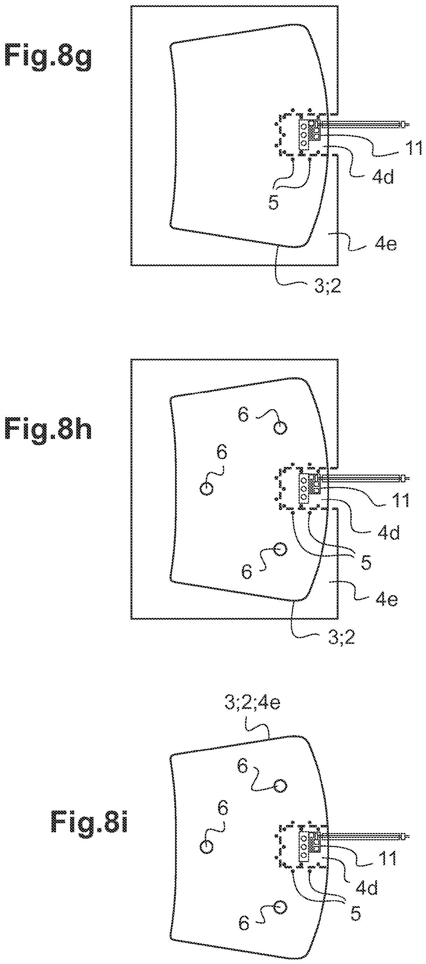

La Figure 8g représente la mise en place (dépose, centrage) du verre extérieur 3 au-dessus de l'ensemble verre intérieur 2 + feuille de PVB 4e + composant surmoulé 11, 4d, ces deux derniers étant solidarisés par des points de soudure 5 sur le verre intérieur 2.

La Figure 8h représente les soudures ponctuelles 6 de l'ensemble ainsi obtenu (verre intérieur 2 + feuille de PVB 4e + composant surmoulé 11, 4d + verre extérieur 3) afin que les différents composants restent bien solidaires les uns des autres lors de la suite du procédé.

La Figure 8i représente la suppression du PVB 4e excédentaire autour du vitrage par détourage périphérique au couteau par exemple. Il est possible d'éliminer cette étape en complétant l'étape de découpe de la fenêtre dans le PVB 4e (Fig 8a) par un détourage complet de la feuille, à la dimension du vitrage.

Il est maintenant question des techniques de fabrication des composants surmoulés.

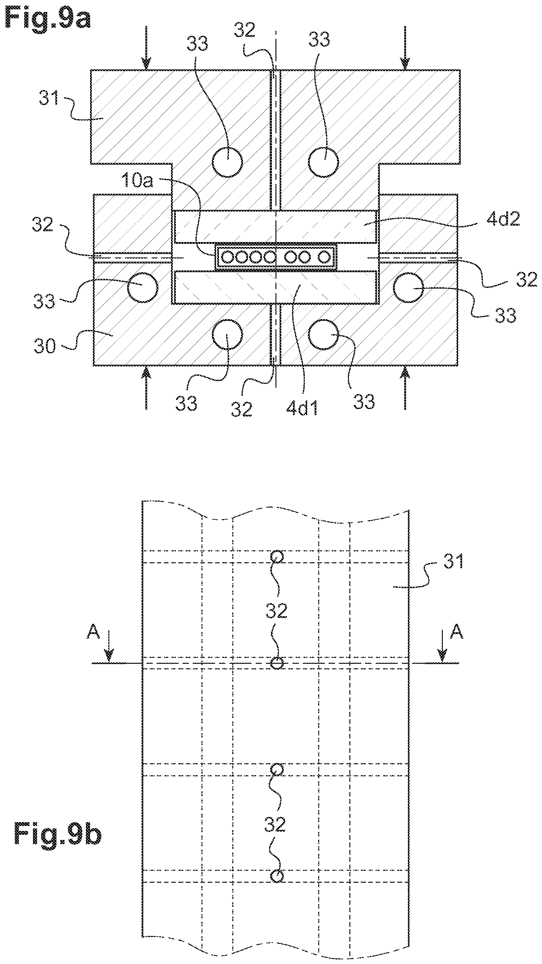

Différentes techniques peuvent être utilisées pour surmouler des composants avec du PVB tout en contrôlant l'épaisseur de l'ensemble. Nous citons quelques exemples non limitatifs de réalisation. Ces exemples sont basés sur trois techniques différentes : le moulage, l'extrusion ou l'injection. Ces techniques ou des combinaisons de ces techniques permettent de réaliser un surmoulage adapté :
- **Technique du moulage** : en référence aux Figures 9a et 9b, une réalisation possible consiste à utiliser un moule en deux parties 30 et 31 complémentaires et disposant d'évents 32 et d'un circuit de chauffage à circulation d'huile 33, puis à y empiler deux feuilles de PVB 4d1 et 4d2 prenant en sandwich le composant à surmouler, une nappe de câbles 10a. Les épaisseurs des feuilles de PVB 4d1 et 4d2 introduites dans le moule sont ajustées afin que le volume total de PVB soit en léger excès. On applique ensuite une pression sur chaque partie 30 et 31 du moule afin de les rapprocher puis on fait circuler une huile chaude dans le circuit de chauffage 33 afin de ramollir le PVB. La pression entre les deux parties du moule peut être exercée par des rondelles Belleville ou bien par une force pneumatique ou hydraulique. Les parties internes du moule ainsi que le plan de moule sont revêtus d'un revêtement téflonné afin que le PVB n'adhère pas sur ses parois.

Lorsque le PVB se ramollit, il s'écrase sous l'effet de la pression exercée entre les deux parties du moule 30 et 31 et vient combler les espaces laissés libres de part et d'autre du composant à surmouler. En fin d'opération, le léger excès de PVB vient combler les évents 32 disposés dans le moule. Ces évents 32 permettent d'utiliser un léger excès de PVB dans le moule afin d'être certain que tous les interstices soient remplis de PVB mais aussi d'assurer que cet excès de matière sera évacué (par les évents 32) afin d'assurer une épaisseur bien maitrisée du composant surmoulé.

En cas de bulles d'air emprisonnées, il est aisé d'introduire le moule dans une enceinte sous vide préalablement au chauffage du moule.
- **Technique de l'extrusion** : Une autre réalisation possible consisterait à procéder à l'aide d'une buse d'extrusion. Un procédé en trois étapes pourrait être envisagé : 1) une première couche de PVB (4d1 sur la Figure 9a) pourrait être disposée en fond de moule (partie femelle 30 sur la Figure 9a) à l'aide d'une buse d'extrusion, puis 2) le composant 10a serait ensuite disposé sur cette première couche de PVB 4d1, enfin, 3) une seconde couche de matériau PVB 4d2 en léger excès pourrait être déposée sur l'ensemble 'première couche de PVB 4d1 + composant 10a'. Afin de parfaire l'ensemble, l'ensemble pourrait être complété par la mise sous pression d'une partie maie de moule 31 puis, à l'image du procédé précédent permettrait d'assurer une épaisseur calibrée pour le composant surmoulé. On peut de façon plus simple imaginer de ne pas utiliser un moule mâle 31 et simplement d'éliminer l'excès de PVB en passant un couteau sur la partie femelle du moule. En cas de bulles d'air emprisonnées, une amélioration consisterait à effectuer l'extrusion dans une enceinte sous vide.
- **Technique de l'injection** : une autre réalisation consiste à injecter directement du PVB autour du composant. Deux difficultés peuvent être rencontrées par cette technique : 1) il faut tout d'abord que le composant puisse supporter les pressions très élevées qui règnent dans le moule d'injection du fait de la grande viscosité du PVB, 2) la seconde difficulté provient du maintien du composant dans le moule d'injection afin qu'il ne se déplace pas lors de l'arrivée du polymère liquide.

Une combinaison intéressante consisterait à disposer d'un moule à deux cavités comme dans le cas du moulage détaillé plus haut mais dont la partie supérieure mâle 31 serait munie de buses d'injection. Le procédé consisterait par exemple à introduire une première feuille de PVB 4d1 qui remplierait la partie femelle du moule puis d'y fixer le composant 10a à y insérer, par soudure par exemple (de façon similaire à la technique qui permet de maintenir le composant surmoulé au verre intérieur Figure 8e) puis de refermer le moule d'injection et ensuite d'injecter le PVB.

Les avantages de l'invention se confirment sur de nombreux points :
- Technique adaptée à n'importe quel composant [relativement peu épais] : le produit intermédiaire [composant surmoulé avec du PVB se présentant sous forme d'une feuille d'épaisseur bien déterminée], peut être fabriqué avec une multitude de composants pour peu qu'une de ses dimensions (son épaisseur) soit faible devant les autres. Ainsi dans les cas décrits, le composant « LED » pourra s'assembler de la même façon que le composant câble blindé. On peut envisager d'autres produits comme des textiles, éventuellement à base de fibres optiques permettant d'éclairer une large portion du vitrage ou bien une zone bien déterminée, des capteurs, des puces RFID...

Dans le cas où l'épaisseur du composant est supérieure à 0.76 mm (épaisseur du PVB standard), on peut envisager de fabriquer un composant surmoulé de 2x0.76 mm = 1.52 mm et de l'assembler avec deux feuilles de PVB empilées l'une sur l'autre.
- Technique productive : sur une ligne industrielle, l'objectif est d'être productif et de ne pas créer de point de ralentissement de cadence. Il est clair que la méthode de l'état de la technique décrite ci-dessus n'est pas adaptée à une ligne industrielle. Par contre, la méthode présentée dans cette déclaration d'invention est compatible. En effet, le temps perdu par rapport à l'assemblage d'un produit standard sans composant consiste en 1) placer le composant dans la fenêtre prédécoupée de la feuille de PVB et 2) souder la périphérie de ces deux composants sur le verre extérieur (comme schématisé sur la Figure 8.e). Cette opération est compatible avec la cadence d'une ligne industrielle sachant que a) il est possible de supprimer l'opération de découpe périphérique de la partie de la feuille de PVB qui dépasse du vitrage en incluant cette découpe dans le même cycle que la découpe de la fenêtre de la feuille de PVB et b) il est possible de construire un outil qui permet d'effectuer les différents points de soudure en une seule opération.
- Peu de rebut qualité : comparé à l'état de la technique sus-mentionné, la technique du composant surmoulé minimise le nombre et les interfaces de feuilles de PVB, diminuant ainsi la probabilité d'enfermer des poussières ou des fibres et qui conduirait à éliminer des produits pour défauts d'aspect, une fois que ces derniers auraient atteint une complète transparence en fin d'opération d'assemblage (dégazage, scellage du bord, autoclave).

Enfin, le contact latéral entre les feuilles de PVB n'a lieu que sur trois côtés, ce qui minimise le risque de bullage lors de l'opération d'assemblage.

## Revendications

1. Vitrage feuilleté comprenant un jeu de diodes (11a) et son électronique de régulation (11c), qui sont portés par un circuit imprimé flexible (en anglais : Flexible Printed Circuit - FPC -) mince (11b) et reliés à une nappe de câbles (11d) munie d'un connecteur (11e) à son extrémité, **caractérisé en ce qu'**il comporte deux feuilles de verre (2, 3), **en ce que** l'ensemble du circuit imprimé flexible (11b) et de la nappe de câbles (11d) est caché du côté intérieur du vitrage par une couche d'émail (21) déposée en face 4 du vitrage et présentant des épargnes (21a) en face de chaque diode (11a) pour laisser passer la lumière émise par celle-ci, et **en ce que** l'ensemble des diodes (11a) du circuit imprimé flexible (11b) et de la nappe de câbles (11d) est caché du côté extérieur du vitrage par une couche d'émail (21') déposée en face 2 du vitrage.

2. Application d'un vitrage feuilleté (1) selon la revendication 1, comme vitrage pour un véhicule de transport terrestre, aquatique ou aérien, pour le bâtiment, le mobilier urbain, ou l'aménagement intérieur.

3. Application d'un vitrage feuilleté (1) selon la revendication 2 comme pare-brise, vitrage latéral, custode ou lunette arrière de véhicule automobile.

## Patentansprüche

1. Verbundverglasung mit einem Satz Dioden (11a) und dessen Steuerelektronik (11c), die von einer dünnen flexiblen gedruckten Schaltung (auf Englisch: Flexible Printed Circuit - FPC) (11b) getragen werden und mit einer Kabellage (11d) verbunden sind, die an ihrem Ende mit einem Verbindungsstück (11e) versehen ist, **dadurch gekennzeichnet, dass** sie zwei Glasscheiben (2, 3) umfasst, dadurch, dass die Gesamtheit der flexiblen gedruckten Schaltung (11b) und der Kabellage (11d) auf der Innenseite der Verglasung durch eine gegenüber von 4 der Verglasung aufgebrachte Emaille-Schicht (21) verdeckt ist, die Aussparungen (21a) gegenüber von jeder Diode (11a) aufweist, um das von dieser emittierte Licht durchzulassen, und dadurch, dass die Gesamtheit der Dioden (11a) der flexiblen gedruckten Schaltung (11b) und der Kabellage (11d) an der Außenseite der Verglasung durch eine gegenüber von 2 der Verglasung aufgebrachte Emaille-Schicht (21') verdeckt ist.

2. Verwendung einer Verbundverglasung (1) nach Anspruch 1 als Verglasung für ein Land-, Wasser- oder Lufttransportfahrzeug, für Gebäude, Stadtmobiliar oder Innenausbau.

3. Verwendung einer Verbundverglasung (1) nach Anspruch 2 als Windschutzscheibe, Seitenverglasung, kleine hintere Seitenscheibe oder Heckscheibe eines Kraftfahrzeugs.

## Claims

1. Laminated glazing comprising a set of diodes (11a) and its control electronics (11c), which are borne by a thin flexible printed circuit -FPC- (11b) and connected to a cable strip (11d) equipped with a connector (11e) at its end, **characterized in that** it includes two glass sheets (2, 3), **in that** the assembly made up of the flexible printed circuit (11b) and the cable strip (11d) is hidden from the interior side of the glazing by an enamel layer (21) deposited on face 4 of the glazing and containing apertures (21a) facing each diode (11a) in order to let pass the light emitted thereby, and **in that** the assembly made up of the diodes (11a), the flexible printed circuit (11b) and the cable strip (11d) is hidden from the exterior side of the glazing by an enamel layer (21') deposited on face 2 of the glazing.

2. Use of a laminated glazing (1) according to Claim 1, as a glazing in a land, water or air transportation vehicle, in the construction industry, in urban furniture, or in interior design.

3. Use of a laminated glazing (1) according to Claim 2 as a motor-vehicle windshield, side window, quarter window or rear windshield.
